# EUROPEAN PATENT APPLICATION

(11) **EP 4 733 718 A1**
(43) Date of publication of application: **29.04.2026**
(21) Application number: 23942313.0
(22) Date of filing: 20.06.2023
(51) Int. Cl.: G01C 21/26

(54) **MAP DELIVERY DEVICE, ONBOARD DEVICE, AND MAP DELIVERY SYSTEM**

(71) Applicant: Astemo, Ltd., Chiyoda-ku, Tokyo 1000004 (JP)
(72) Inventor: KATO, Kunihiro, Hitachinaka-shi, Ibaraki 312-8503 (JP); AMPO, Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2023/022795
(87) International publication number: WO 2024/261876

(57) **Abstract**

To provide a map delivery device, an onboard device that receives map data from the map delivery device, and a map delivery system configured such that the map delivery device and the onboard device can communicate with each other, the map delivery device being capable of reducing an amount of delivery data, reducing a communication cost, and preventing performance deterioration of map update processing by delivering update data narrowed down to a necessary range in accordance with a type of road in path information when updating map data along a path. (A map delivery device 10 of) a map delivery system 1 in the present embodiment manages map data by different section methods according to the type of road (expressway and general road), and delivers map data of different section methods according to the type of road in the path information. When the type of road in the path information is an expressway section, map data of a partitioning method in units of roads, which is managed along a route is delivered. When the type of road in the path information is a general road section, map data of a partitioning method in units of meshes, which is managed by dividing the road into predetermined regions is delivered.

## Description

### Technical Field

The present invention relates to a map delivery device, an onboard device that receives map data from the map delivery device, and a map delivery system configured such that the map delivery device and the onboard device can communicate with each other.

### Background Art

As a method of updating map data of an onboard device, a method of delivering map data from a server by using a communication device and updating the map data is known. In the method using the communication device, a communication cost and a time for update processing are required according to the amount of data to be delivered, and thus a technique for reducing the amount of data to be delivered is being studied. For example, in PTL 1, delivery is performed by dividing roads into types of "expressway", "general road", and "narrow street". There is disclosed a technique for using update data of a whole country as a delivery target for "expressway" and reducing delivery targets to update data of a delivery target area centered on a destination for "general road" and "narrow street".

### Citation List

### Patent Literature

PTL 1: JP 2012-181040 A

### Summary of Invention

### Technical Problem

As described above, PTL 1 discloses the method of reducing the amount of data regarding "general road" and "narrow street". However, since PTL 1 discloses that the "expressway" is delivered to the whole country, it is not possible to consider reduction in the amount of data with respect to update of the expressway, in PTL 1. Therefore, in PTL 1, when a map is updated along a path, there remain problems such as an increase in the amount of data due to delivery of map data that is not related to the route, an increase in communication cost with an increase in the amount of data, and performance deterioration of map update processing.

Therefore, an object of the present invention is to provide a map delivery device, an onboard device that receives map data from the map delivery device, and a map delivery system configured such that the map delivery device and the onboard device can communicate with each other, the map delivery device being capable of reducing an amount of delivery data, reducing a communication cost, and preventing performance deterioration of map update processing by delivering update data narrowed down to a necessary range according to a type of road in path information when updating map data along a route.

### Solution to Problem

In order to achieve the above object, according to the present invention, a map delivery device includes: a map recording unit that records map data; a path acquisition unit that acquires path information on the map data; and a map delivery unit that delivers map data divided by different partitioning methods based on the path information.

Further, according to the present invention, an onboard device includes: a map acquisition unit that acquires map data; and a map recording unit that records the map data, in which the map acquisition unit acquires, from a map delivery device, the map data divided by different partitioning methods based on path information on the map data.

Further, according to the present invention, a map delivery system includes: a map delivery device including a map recording unit that records map data, a path acquisition unit that acquires path information on the map data, and a map delivery unit that delivers, to a vehicle, map data divided by different partitioning methods based on the path information; and an onboard device including a map acquisition unit that acquires, from the map delivery device, the map data divided by different partitioning methods based on the path information, and a map recording unit that records the map data acquired by the map acquisition unit.

### Advantageous Effects of Invention

According to the present invention, for example, since the map data of any one of section management methods is delivered according to the type of road (expressway and general road) in path information, it is possible to reduce the amount of delivery data. In addition, by not delivering map data which is not related to path information, it is possible to reduce a communication cost and it is possible to prevent performance deterioration of map update processing.

Problems, configurations, and effects other than those described above will be clarified by the following description of embodiments.

### Brief Description of Drawings

[FIG. 1] FIG. 1 is a block diagram illustrating a configuration of a map delivery system according to an embodiment.
[FIG. 2] FIG. 2 is a diagram illustrating a map data management method.
[FIG. 3] FIG. 3 is a diagram illustrating an example of division at an interchange of a route map.
[FIG. 4] FIG. 4 is a diagram illustrating an example of division at a junction of the route map.
[FIG. 5] FIG. 5 is a diagram illustrating a method of selecting a route map based on path information.
[FIG. 6] FIG. 6 is a diagram illustrating a method of delivering map data of any one of section management methods according to a type of road in the path information.
[FIG. 7] FIG. 7 is a diagram in which an amount of delivery data is visually expressed by the number of roads in one mesh and is compared.
[FIG. 8] FIG. 8 is a diagram illustrating related data that associates map data of different section methods.
[FIG. 9] FIG. 9 is a diagram illustrating search data for searching a route map in units of regions.
[FIG. 10] FIG. 10 is a diagram illustrating a flow of acquiring map data along a path.

### Description of Embodiments

Hereinafter, an embodiment of the present invention will be described with reference to the drawings.

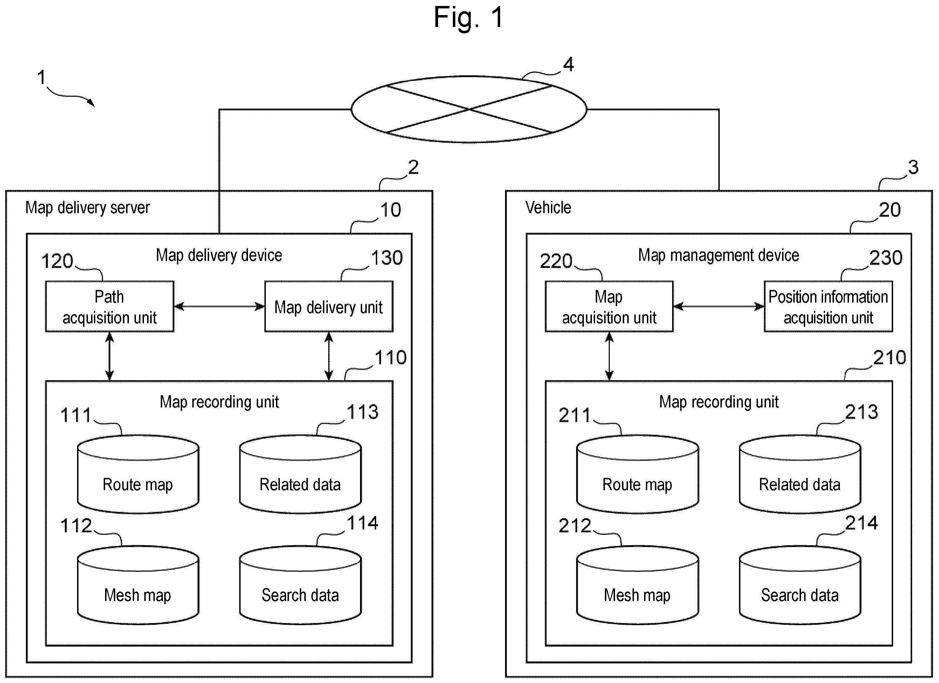

FIG. 1 is a diagram illustrating a configuration example of a map delivery system 1 according to the embodiment.

The map delivery system 1 in the present embodiment includes a map delivery server 2, a vehicle 3, and a network 4. The map delivery server 2 and the vehicle 3 are configured to be able to transmit and receive map information via the network 4.

The map delivery device 10 included in the map delivery server 2 includes a map recording unit 110 that records map data, a path acquisition unit 120 that acquires path information on the map data, and a map delivery unit 130 that delivers map data based on the path information.

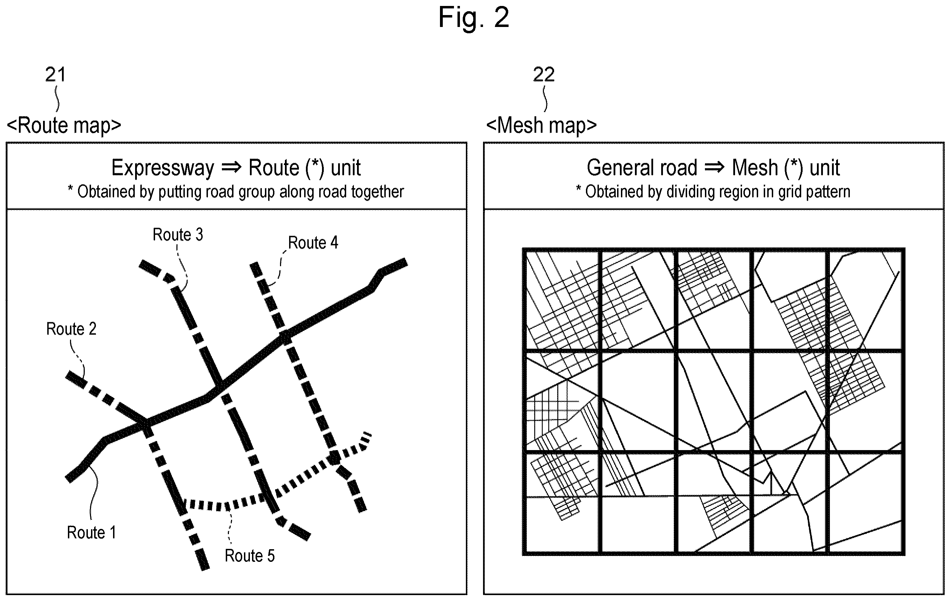

FIG. 2 is a diagram illustrating contents of map data managed by the map recording unit 110.

The map recording unit 110 manages map data by different partitioning methods according to the type of road. As illustrated in FIG. 2, for an expressway, a route map 21 is recorded in a unit (referred to as a "route" below) obtained by putting road groups along the road together. For a general road, a mesh map 22 is recorded in a unit (referred to as a "mesh" below) obtained by dividing a region in a grid pattern.

A mesh map 112 (FIG. 1) manages map data such as a road shape and a road attribute for each mesh. The size of the mesh is free.

A route map 111 (FIG. 1) manages map data such as a road shape and a road attribute for each route.

The route map 111 divides and records map data in units of branches on a path. For example, map data is divided at an interchange, a junction, or the like. A parking area is separated from the main line, but is not divided because of necessity to return to the main line again.

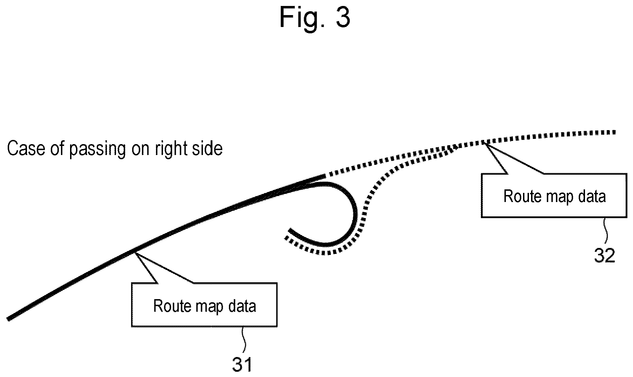

FIG. 3 is a diagram illustrating a case where the route map 111 is divided at an interchange. Route map data 31 includes data of a main line portion and data of a branch road. Route map data 32 includes data of a main line portion and data of a merging road.

An automatic driving assistance device or the like needs not only map data of a road on which a vehicle is traveling but also map data of surrounding roads on which the vehicle is likely to travel. Thus, it is possible to respond to these requests by managing branch and merging roads running side by side with the main line as one type of data.

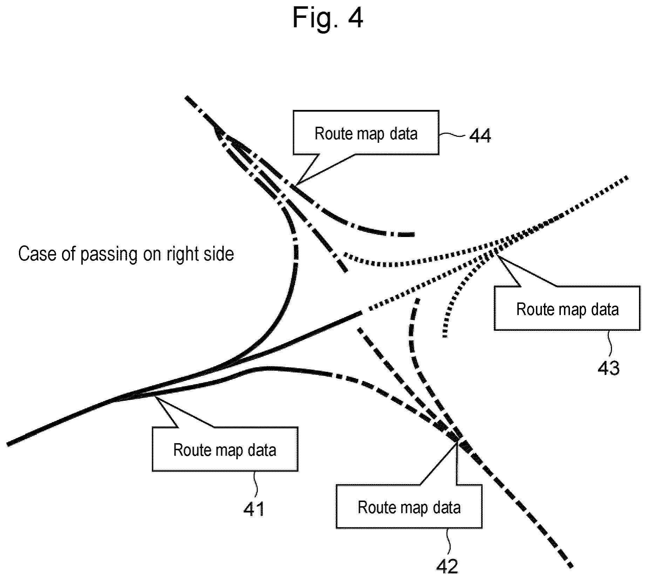

FIG. 4 is a diagram illustrating a case where the route map 111 is divided at a junction. Route map data 41 includes data of a main line portion and data of each branch road. Route map data 42, route map data 43, and route map data 44 include data of a main line portion and data of the respective merging roads.

Similarly to the interchange, at the junction, branch and merging roads running side by side with the main line portion are managed as one type of data.

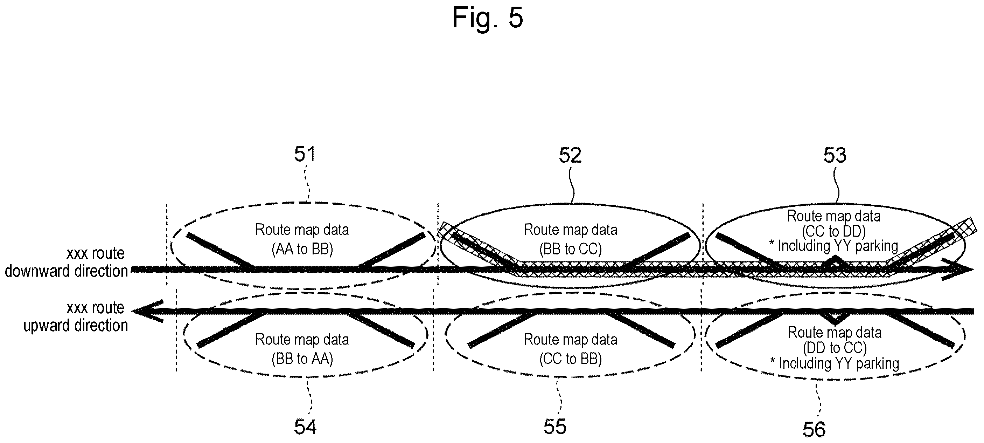

FIG. 5 is a diagram illustrating a method of selecting a route map based on path information. In FIG. 5, for example, in a case where path information enters into an expressway from a BB entrance, passes through CC, and exits the expressway at a DD exit, route map data 52 and route map data 53 are acquired as route map data of a section corresponding to the path information (pieces of route map data 51, 54, 55, 56 are not acquired). By dividing the route map data in units of branches of the route, it is possible to acquire only necessary route map data according to the path information.

The path acquisition unit 120 acquires path information on the map data. The path information retains at least an attribute for identifying whether the type of road is an expressway or a general road.

The map delivery unit 130 acquires map data of different partitioning methods from the map recording unit 110 according to the type of road based on the path information acquired from the path acquisition unit 120, and delivers the map data.

When the type of road in the path information is an expressway section, the map delivery unit 130 delivers the route map 111 of a partition method in units of routes, which is managed along a route.

When the type of road in the path information is a general road section, the map delivery unit 130 delivers a mesh map 112 of a partitioning method in units of meshes, which is managed by dividing the road by a predetermined region.

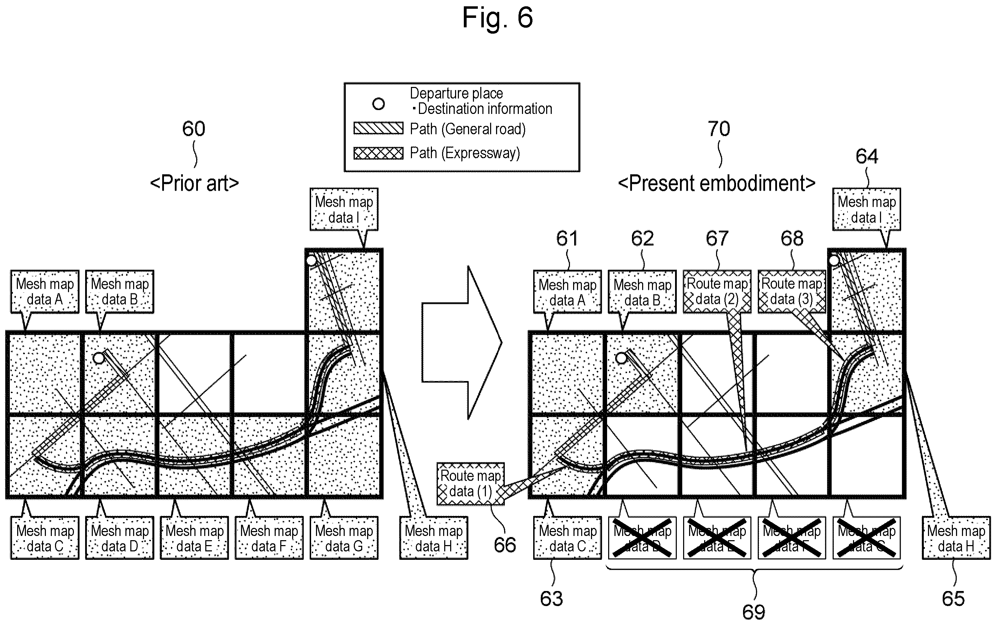

FIG. 6 is a diagram illustrating a method of delivering map data of any one of section management methods based on the type of road in the path information. In the case of the example illustrated in FIG. 6, in a method 60 of the related art, map data (mesh map data) in units of meshes is delivered in all sections regardless of the type of road in the path information.

In a method 70 of the present embodiment, in the section of a general road, mesh map data 61, mesh map data 62, mesh map data 63, mesh map data 64, and mesh map data 65 are delivered. In the section of an expressway, mesh map data 69 is not delivered, and route map data 66, route map data 67, and route map data 68 are delivered.

Since the map data (route map 111 and mesh map 112) of any one of the section management methods is delivered according to the type of road in the path information, it is possible to reduce the amount of delivery data.

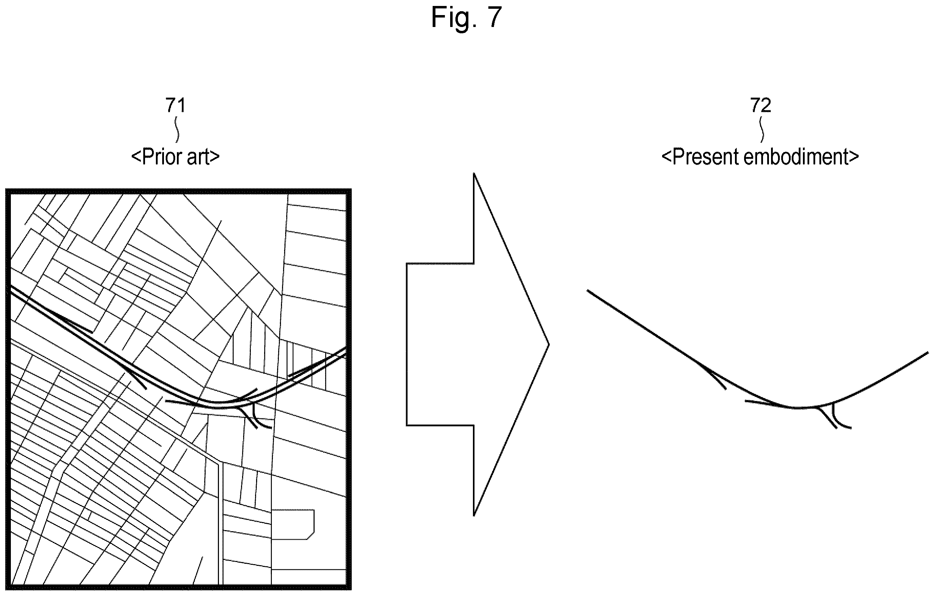

FIG. 7 is a diagram in which the amount of delivery data in a method 71 of the related art and the amount of delivery data in a method 72 according to the present embodiment are visually expressed by the number of roads in one mesh and are compared with each other. In the example illustrated in FIG. 6, the mesh map data 69 is a portion where the method of the related art is changed to the method according to the present embodiment, and the comparison of the amount of delivery data of the mesh map data 69 is illustrated.

As illustrated in FIG. 7, in the method 71 of the related art, a general road in a mesh is set as a delivery target in addition to an expressway section, whereas in the method 72 according to the present embodiment, only the expressway section is set as the delivery target, so that it is possible to reduce the amount of delivery data.

The magnitude of the effect of reducing the amount of data varies depending on how many general roads are recorded in the mesh. However, in the present embodiment, the amount of delivery data does not increase because the data of the general road is excluded from a state where all pieces of data in the method of the related art are set as targets.

Also in the expressway section, since map data for the upward direction and map data for the downward direction are distinguished from each other and are managed as the route map 111, either the upward direction or the downward direction is selected and delivered according to the path information. Thus, it is possible to also reduce the amount of delivery data of the expressway section.

Next, related data 113 recorded in the map recording unit 110 of FIG. 1 will be described.

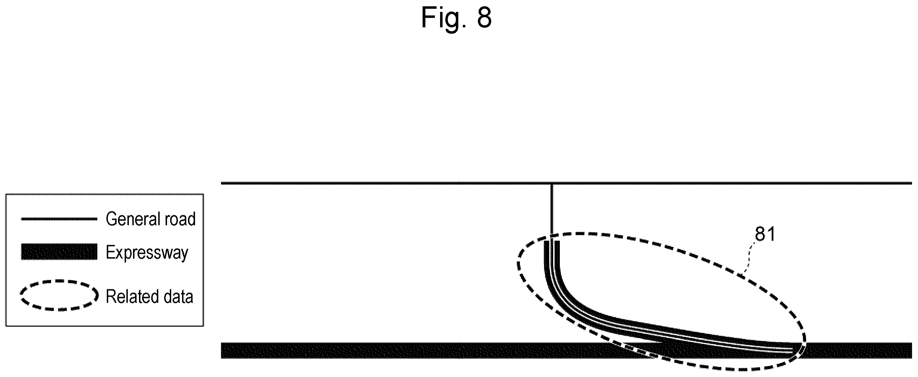

FIG. 8 is a diagram illustrating a delivery target range of related data that associates map data of different section methods. It is common to prepare data associating map data with different management methods, but the amount of data can be reduced by narrowing the range down to deliver related data. In FIG. 8, only a ramp section 81 where a general road and an expressway are connected is set as a delivery target.

Next, search data 114 recorded in the map recording unit 110 of FIG. 1 will be described.

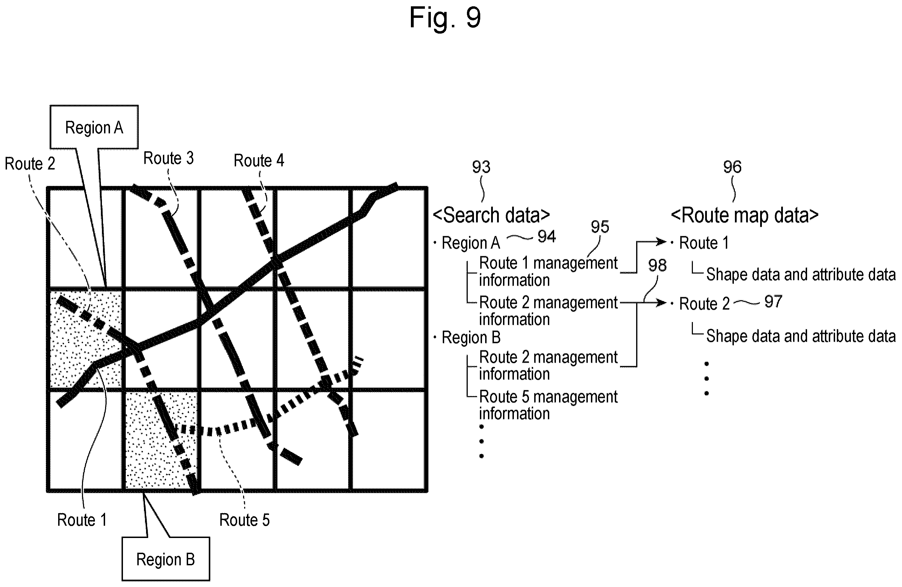

FIG. 9 is a diagram illustrating search data for searching the route map 111 in units of regions. The automatic driving assistance device or the like searches for the surrounding map data from coordinate information of the vehicle when acquiring map data around the vehicle. Since the mesh map 112 is mesh-managed in a grid pattern at regular intervals, it is possible to search for a mesh from the coordinate information of the vehicle.

In the route map 111, a surrounding route map can be acquired by acquiring coordinates from shape data included in each piece of the route map data 96 and comparing the acquired coordinates with coordinate information of the vehicle, but this method requires processing for all pieces of the route map data 96, and thus is inefficient.

Therefore, the map delivery unit 130 delivers search data 93 for acquiring the route map in units of regions.

The search data 93 is managed in units of regions (91, 92) having any size. The size of the management region of the search data 93 may be, for example, the same as or different from the size of the management region (mesh) of the mesh map 112. Since the regions are divided at regular intervals, the regions can be specified from any coordinates by proportional calculation. Note that, as a method of obtaining a region from coordinates, there are techniques such as a mesh code and a tile ID. Search data 94 of each region records management information 95 of route map data existing in the region. The management information 95 retains only index information for referring to route map data 96. For example, in route map data 97 existing across the region 91 and the region 92, route map data having a large data size such as shape data and attribute data is aggregated into one piece of data, and the route map data is referred to (98) from a plurality of regions by using the index information.

That is, the search data 93 is data in which a predetermined range divided by map data of one partitioning method (for example, a partitioning method in units of meshes (regions) managed by dividing a road by a predetermined region) and map data of other partitioning method (for example, a partitioning method in units of routes, which is managed along a route) included in each predetermined range are associated with each other. Such data is used when map data of the other partitioning method is searched for based on map data of one partitioning method. The map delivery unit 130 delivers the search data 93 in order to acquire map data (route map) of the other partitioning method in units of regions.

Next, a map management device 20 of a vehicle 3, which is an onboard device, will be described.

The map management device 20 included in the vehicle 3 includes a map recording unit 210 that records map data, a map acquisition unit 220 that acquires map data, and a position information acquisition unit 230 that acquires position information of the vehicle 3.

Similarly to the map recording unit 110 of the map delivery device 10, the map recording unit 210 manages map data by different partitioning methods according to the type of road. As illustrated in FIG. 2, for an expressway, a route map 211 is recorded in a unit obtained by putting road groups along the road together. For a general road, a mesh map 212 is recorded in a unit obtained by dividing a region in a grid pattern.

In addition, the map recording unit 210 records related data 213 that associates map data of different partitioning management methods, and search data 214 for searching for a route map in units of regions.

The map acquisition unit 220 receives map data (that is, map data divided by different partitioning methods based on the path information on the map data) from the map delivery server 2 via the network 4, and updates the map data of the map recording unit 210 of the vehicle 3.

The position information acquisition unit 230 acquires the current position of the vehicle 3 and the position information of a departure place and a destination.

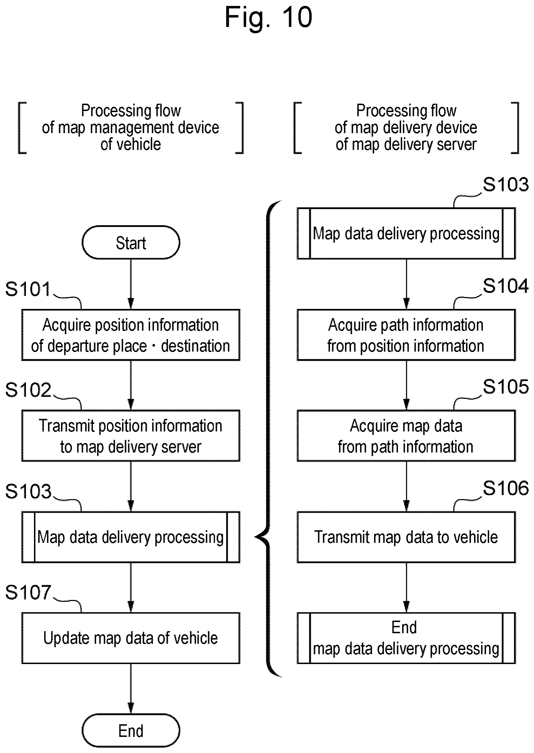

FIG. 10 is a diagram illustrating a flow of acquiring map data along a path in the vehicle 3 from the map delivery server 2.

The map acquisition unit 220 of the map management device 20 of the vehicle 3 acquires the position information of the departure place and the destination from the position information acquisition unit 230. (S101)

Subsequently, the map acquisition unit 220 transmits the position information to the map delivery device 10 of the map delivery server 2 via the network 4. (S102)

Next, a processing flow of the map delivery device 10 of the map delivery server 2 will be illustrated in S103.

The path acquisition unit 120 of the map delivery device 10 of the map delivery server 2 acquires path information from the received position information. (S104)

The map delivery unit 130 acquires the route map 111, the mesh map 112, the related data 113, and the search data 114 from the map recording unit 110 based on the path information. (S105)

Subsequently, the map delivery unit 130 transmits the acquired map data to the map management device 20 of the vehicle 3 via the network 4. (S106)

The map acquisition unit 220 of the map management device 20 of the vehicle 3 updates the route map 211, the mesh map 212, the related data 213, and the search data 214 which are recorded in the map recording unit 210, with the received map data. (S107)

Next, a flow of acquiring route map data around the vehicle by using the search data in the vehicle 3 will be described with reference to FIG. 9.

A region 91 is specified by proportionally calculating a region divided at regular intervals from the coordinates of the vehicle.

Subsequently, search data 94 of the region 91 is specified from the search data 93.

Subsequently, route management information is acquired from the search data 94.

Subsequently, route map data 96 is referred from the index of the route management information.

As described above, the map delivery device 10 in the present embodiment includes the map recording unit 110 that records map data, the path acquisition unit 120 that acquires path information on the map data, and the map delivery unit 130 that delivers map data (route map 111 and mesh map 112) divided by different partitioning methods based on the path information.

The map delivery unit 130 delivers map data (route map 111 and mesh map 112) of different partitioning methods according to the type of road in the path information.

The map recording unit 110 manages map data (route map 111, mesh map 112, and the like) by different partitioning methods according to the type of road.

When the road is an expressway section, the map delivery unit 130 delivers map data (route map 111) of the partitioning method in units of routes, which is managed along the route.

When the road is a general road section, the map delivery unit 130 delivers map data (mesh map 112) of the partitioning method in units of meshes, which is managed by dividing the road by a predetermined region.

The map delivery unit 130 delivers the related data 113 associating the map data (route map 111 and mesh map 112) of the different partitioning methods in a predetermined section.

The map delivery unit 130 delivers the search data 114 in which a predetermined range divided by map data of a first partitioning method and map data of a second partitioning method included for each predetermined range are associated with each other, the search data being used when the map data of the second partitioning method is searched for based on the map data of the first partitioning method.

The first partitioning method is a partitioning method in units of meshes (regions), which is managed by being divided by a predetermined region, and the second partitioning method is a partitioning method in units of roads, which is managed along a route.

In addition, the map management device 20, which is an onboard device of the present embodiment, includes the map acquisition unit 220 that acquires map data and the map recording unit 210 that records the map data, and the map acquisition unit 220 acquires, from the map delivery device 10, the map data (route map 111 and mesh map 112) divided by different partitioning methods based on the path information on the map data.

In addition, the map delivery system 1 of the present embodiment includes the map delivery device 10 including the map recording unit 110 that records map data, the path acquisition unit 120 that acquires path information on the map data, and the map delivery unit 130 that delivers, to the vehicle, map data (route map 111 and mesh map 112) divided by different partitioning methods based on the path information, and the map management device 20 that is an onboard device and includes the map acquisition unit 220 that acquires, from the map delivery device 10, the map data (route map 111 and mesh map 112) divided by different partitioning methods based on the path information, and the map recording unit 210 that records the map data acquired by the map acquisition unit 220.

That is, (the map delivery device 10 of) the map delivery system 1 in the present embodiment manages map data by different section methods according to the type of road (expressway and general road) in the path information, and delivers map data of different section methods according to the type of road in the path information. When the type of road in the path information is an expressway section, map data of a partitioning method in units of routes, which is managed along a route is delivered. When the type of road in the path information is a general road section, map data of a partitioning method in units of meshes, which is managed by dividing the road into predetermined regions is delivered.

In still other words, (the map delivery device 10 of) the map delivery system 1 in the present embodiment manages map data by the different section management methods according to the type (expressway and general road) of the road in the path information, and in the updating along the path, a section of an expressway is delivered in units of routes and a section of a general road is delivered in units of meshes.

According to the present embodiment, for example, since the map data of any one of section management methods is delivered according to the type of road (expressway and general road) in the path information, it is possible to reduce the amount of delivery data. In addition, by not delivering map data which is not related to path information, it is possible to reduce a communication cost and it is possible to prevent performance deterioration of map update processing.

Note that the present invention is not limited to the above-described embodiment, and includes various modifications. For example, the above-described embodiment has been described in detail for easy understanding of the present invention, and the present invention is not necessarily limited to those having all the described configurations.

In addition, some or all of the above-described components, functions, processing units, processing means, and the like may be realized by hardware, for example, by designing with an integrated circuit. In addition, each of the above-described components, functions, and the like may be realized by software by a processor interpreting and executing a program for realizing each function. Information such as a program, a table, and a file for realizing each function can be stored in a recording device such as a memory, a hard disk, and an SSD (Solid State Drive), or a recording medium such as an IC card, an SD card, and a DVD.

In addition, the control lines and the information lines indicate what is considered to be necessary for the description, and do not necessarily indicate all the control lines and the information lines on the product. In practice, it may be considered that almost all the components are connected to each other.

### Reference Signs List

- 1: map delivery system
- 2: map delivery server
- 3: vehicle
- 4: network
- 10: map delivery device
- 110: map recording unit
- 111: route map
- 112: mesh map
- 113: related data
- 114: search data
- 120: path acquisition unit
- 130: map delivery unit
- 20: map management device (onboard device)
- 210: map recording unit
- 211: route map
- 212: mesh map
- 213: related data
- 214: search data
- 220: map acquisition unit
- 230: position information acquisition unit

## Claims

1. A map delivery device comprising:
a map recording unit that records map data;
a path acquisition unit that acquires path information on the map data; and
a map delivery unit that delivers map data divided by different partitioning methods based on the path information.

2. The map delivery device according to claim 1, wherein the map delivery unit delivers map data of different partitioning methods according to a type of road in the path information.

3. The map delivery device according to claim 1, wherein the map recording unit manages map data by different partitioning methods according to a type of road.

4. The map delivery device according to claim 2, wherein when the road is an expressway section, the map delivery unit delivers map data of a partitioning method in units of routes, which is managed along the route.

5. The map delivery device according to claim 2, wherein when the road is a general road section, the map delivery unit delivers map data of a partitioning method in units of meshes, which is managed by dividing the road by a predetermined region.

6. The map delivery device according to claim 1, wherein the map delivery unit delivers related data associating pieces of map data of the different partitioning methods with each other in a predetermined section.

7. The map delivery device according to claim 1, wherein the map delivery unit delivers search data in which a predetermined range divided by map data of a first partitioning method and map data of a second partitioning method included for each predetermined range are associated with each other, the search data being used when the map data of the second partitioning method is searched for based on the map data of the first partitioning method.

8. The map delivery device according to claim 7, wherein
the first partitioning method is a partitioning method in units of meshes, which is managed by being divided by a predetermined region, and
the second partitioning method is a partitioning method in units of routes, which is managed along a route.

9. An onboard device comprising:
a map acquisition unit that acquires map data; and
a map recording unit that records the map data,
wherein the map acquisition unit acquires, from a map delivery device, the map data divided by different partitioning methods based on path information on the map data.

10. A map delivery system comprising:
a map delivery device including
a map recording unit that records map data,
a path acquisition unit that acquires path information on the map data, and
a map delivery unit that delivers, to a vehicle, map data divided by different partitioning methods based on the path information; and
an onboard device including
a map acquisition unit that acquires, from the map delivery device, the map data divided by different partitioning methods based on the path information, and
a map recording unit that records the map data acquired by the map acquisition unit.
